# EUROPEAN PATENT APPLICATION

(11) **EP 2 535 315 A1**
(43) Date of publication of application: **19.12.2012**
(21) Application number: 11169985.6
(22) Date of filing: 15.06.2011
(51) Int. Cl.: C02F 1/32, C02F 1/76

(54) **Method and arrangement for a water treatment**

(71) Applicant: SIEMENS AKTIENGESELLSCHAFT, 80333 München (DE)
(72) Inventor: Sichel, Cosima, 89077 Ulm (DE)

(57) **Abstract**

The invention relates to a water treatment using an AOP.

The invention uses a process control of AOPs as for example traditional chemical AOPs or chlorine species AOPs as well as UV AOPs or UV/chlorine species AOPs by the chlorine species demand of the water to be treated. A chlorine species dissolved in the water to be treated are reacting with organic water constitutes while this consumption of the chlorine species gives an approximation for changes within the organic load of the water background as well as being the leading parameter for controlling the AOP.

## Description

The present invention relates to water treatment using an AOP.

Within the last years many research works showed a suitability of Advanced Oxidation Processes (AOPs) for many applications, especially for water treatment ("Photochemical Processes for Water Treatment", Legrini, O., Oliveros, E., Braun, A. M., Chm. Rev. 1093,93,671 - 698; "Figures of Merit for the technical development and application of Advanced Oxidation Processes", Bolton et al., J. of Advanced Oxidation Technologies, 1,1 (1996)13-17).

Advanced Oxidation Processes (AOPs) for water treatment use a potential of high reactive radial species, mainly hydroxyl radicals (OH*), for oxidation of toxic or non or less biodegradable hazardous water contaminants as industrial and emerging contaminants.

Due to the high oxidation potential and low selectivity of the hydroxyl radicals, therefore reacting with almost every organic compound, the AOP can therefore be used to eliminate the contaminants, i.e. residuals of pesticides, pharmaceuticals, hormones, drugs, personal care products or x-ray contrast media, from (contaminated) water.

A versatility of AOPs is also enhanced by the fact that they offer different possible ways for hydroxyl radicals production, thus allowing a better compliance with specific treatment requirements.

A suitable, traditional, chemical application of AOP to wastewater treatments must consider that they make use of expensive reactants/oxidants such as H₂O₂ and/or O₃ for generating hydroxyl radicals.

Peroxone, as a combination of the oxidants ozone O₃ and hydrogen peroxide H₂O₂, is known as a new and advanced oxidation process (peroxone AOP) that can be used for the treatment of polluted soils, groundwater and wastewater.

Peroxone can be actively used to decompose pollutants, such as volatile organic compounds, chlorinated solvents, monition, diesel, volatile organic hydrocarbons, PAH's (polinuclear aromatic hydrocarbons), other hydrocarbons, petrol, metals and TNT. It can also be applied in drinking water disinfection.

The peroxone process uses the oxidant ozone (O₃) combined with the oxidant hydrogen peroxide (H₂O₂). During this process the very persistent hydroxyl radicals are formed reacting with or oxidize most organic pollutants in a solution. The addition of hydrogen peroxide accelerates the dissolution of ozone, causing the hydroxyl radical concentration to be enhanced. The net free hydroxy radical production rate is about 1 mol per mol of ozone.

"Photocatalysis with solar energy at a pilot-plant scale: an overview", Malato et al., Applied Catalysis B: Environmental 37 (2002) 1-15 review a use of sunlight to produce hydroxyl radicals.

At an ultraviolet driven AOP (UV AOP) UV radiation will be used to generate the hydroxyl radicals by a photolysis. Traditional UV driven AOPs for water treatment can be resumed as UV/H₂O₂ or UV/Ozone (UV/O₃) or their combinations, since H₂O₂ or O₃ are being photolysed by UV radiation producing hydroxyl radicals.

An UV driven chlorine species process as an AOP (UV/chlorine species AOP) is known from "Assessment of the UV/Chlorine process as an advanced oxidation process", Jing Jin et al., Water Research 45, 1890 - 1896, 2011 and "Chlorine photolysis and subsequent OH radical production during UV treatment of chlorinated water", Michael J. Watts, et al., Water Research 41, 2871 - 2878, 2007, producing hydroxyl radicals by irradiating chlorinated solutions with UV.

It is further known from "Assessment of the UV/Chlorine process as an advanced oxidation process", Jing Jin et al., Water Research 45, 1890 - 1896, 2011, that such an UV/chlorine AOP could be a treatment option for disinfection by-products (DBPs) that are produced during chlorine disinfection in swimming pools and can be used to inactivate water-borne pathogenic microorganisms and to destroy hazardous organic compounds in drinking water and wastewater.

Other UV AOPs are known as UV/TiO₂ or UV/S₂O₈ ("Photochemical Processes for Water Treatment", Legrini, O., Oliveros, E., Braun, A. M., Chm. Rev. 1093,93,671 - 698).

Existing AOPs require the use of expensive reactants/oxidants, for example H₂O₂ and/or O₃, especially in case of said peroxone process AOP using H₂O₂ and O₃, as well as a high energy demand needed for radical production, for example a high UV irradiation energy for radical production by an UV AOP, while an important number of radicals is not consumed by oxidation of the contaminants but by side reactions with organic background of a water matrix, i.e. humins, humic acid or citric acid.

Equipments for dosing as well as for a controlled dosing of chlorine species to water to be treated are known as well as equipments for irradiating water with UV, for example "Wallace & Tiernan®, Wasseraufbereitungs- und Desinfektionssysteme", Oktober 2010.

A measuring system for measuring a chlorine species demand in waste water is known from "Messung der Chlorzehrung in Abwasserproben", TU Dresden, Dr. A. Kuntze, Gutes Wasser mit System, Stand 2008.

### SUMMARY OF THE INVENTION

It is a first objective of the invention to provide a method and an arrangement by which the above-mentioned shortcomings in water treatment can be mitigated.

It is a second objective of the present invention to provide a method and an arrangement for an efficient, ecological and economical water treatment, especially for contaminated water and/or wastewater.

These objectives are according to the invention achieved by providing a method for a water treatment. This method comprising the following steps:
(a) adding a chlorine species to water to be treated to be dissolved (free chlorine species) in said water to be treated,
(b) measuring a demand of said chlorine species dissolved in said water to be treated (chlorine species demand) while said chlorine species dissolved in said water to be treated partly reacting with organic water constitutes within said water to be treated,
(c) applying an AOP, e.g. a traditional, chemical AOP or especially a chlorine species AOP, to said water to be treated while controlling said AOP by using said measured demand of said chlorine species dissolved in said water to be treated.

Controlling said AOP by using said chlorine species demand means that said measured demand will be a leading parameter for controlling the forming of the hydroxyl radicals. Depending on said chlorine species demand a number of hydroxyl radicals could be regulated.

Said adding of said chlorine species to said water to be treated, said measuring of said chlorine species demand dissolved in said water to be treated (chlorine species demand) and said applying of said AOP to said water to be treated could be performed "in series" as well as in "by pass" to said water to be treated.

Performed "in series" means that said adding, said measuring and said applying would be performed to a single, e.g. one, flow of said water to be treated.

Performed in "by pass" means that said water to be treated would be split in a main stream/flow as well as a by pass stream/flow, said by pass stream/flow bypassing said main stream/flow while applying said AOP to said main stream/flow. Said measuring/said adding and said measuring could be performed in said by pass stream/flow while said applying of said AOP would be performed in said main stream/flow.

Consequently these solutions - in case of said single flow solution - said chlorine species added would be a reactant/oxidant of the - chlorine species - AOP as well as said leading parameter for controlling of the - chlorine species - AOP. In case of said main/by pass flow solution - said chlorine species would be the leading parameter - added and measured in said by pass flow - while said AOP could be performed by an alternative reactant/oxidant added to said water to be treated in said main flow.

Said regulation of said number of hydroxyl radicals could be performed for example by adjusting an adding of a reactant/oxidant of said AOP, e.g. adjusting said adding of said chlorine species (single flow solution) and/or adjusting an adding of another, i.e. alternative, reactant/oxidant (main/by pass flow solution), and/or by regulating or adjusting (other) conditions of/for said AOP/chlorine species AOP, for example a pH value, a flow rate and/or a temperature of the water to be treated as well as an application of energy to said water to be treated.

These objects are according to the invention also achieved by providing an arrangement for a water treatment.

This arrangement comprises a dosing means arranged for adding a chlorine species to water to be treated to be dissolved (free chlorine species) in said water to be treated.

This arrangement further comprises a measuring means for measuring a demand of said chlorine species dissolved in said water to be treated (chlorine species demand) while said chlorine species dissolved in said water to be treated partly reacting with organic water constitutes within said water to be treated.

This arrangement furthermore comprises an AOP chamber for applying an AOP, e.g. a traditional, chemical AOP or especially a chlorine species AOP, to said water to be treated.

This arrangement further more comprises a controlling means said controlling means at least being coupled to said measuring means and an acting means for acting on said water treatment, said controlling means further being arranged for controlling said AOP/chlorine species AOP by using said measured demand of said chlorine species dissolved in said water to be treated and said acting means for acting on said water treatment.

Said AOP chamber used for said AOP/chlorine species AOP has to be understood as well as a zone or area being flown through by said water to be treated within said zone or area said AOP/chlorine species AOP is being applied.

Said acting means for acting on said water treatment for controlling has to been understood as any means which could directly as well as indirectly regulate said number of hydroxyl radicals by said acting, for example means being arranged for regulating or adjusting an adding of a reactant/oxidant of said AOP, e.g. said dosing means for said adding of said chlorine species (single flow solution) and/or other means being arranged for regulating or adjusting an adding of another, i.e. alternative reactant/oxidant of said AOP (main/by pass flow solution), and/or means being arranged for regulating or adjusting (other) conditions of/for said AOP/chlorine species AOP, i.e. for said hydroxyl radicals forming, for example a further dosing means adding reactants for regulating said pH value, a temperature regulating means regulating said temperature of the water to be treated as well as an energy source for applying energy to said water to be treated.

In other words - the invention relates to a process control of AOPs, for example traditional, chemical AOPs, for example H₂O₂ AOPs, O₃ AOPs or peroxone AOPs, or chlorine species AOPs as well as UV AOPs or UV/chlorine species AOPs, by the chlorine species demand.

The chlorine species, i.e. chlorine or chlorine dioxide, - dissolved in the water to be treated, i.e. contaminated water, - is reacting with organic water constitutes (organic background of the water matrix) while this consumption of the chlorine species - measured for example within a defined period - gives an approximation for changes within the organic load of the water background as well as is the leading parameter for controlling the AOP.

In case of higher organic load of the water more radicals (and more chlorine species) will be lost/consumed to these side reactions and a higher radical production (and a higher amount of the AOP oxidant) is/are needed, for example to meet a treatment target contaminant degradation.

In case of such an increase of the organic background load of the water to be treated - indicated by a higher demand/consumption of the chlorine species added to and dissolved in the water to be treated - the AOP process can be up-regulated - to form a higher amount of radicals for oxidation in said AOP.

Up-regulated could mean - in case of a chemical based AOP/chlorine species based AOP - an increase of the oxidant/an increase of the chlorine species. Up-regulated could also mean - in case of an UV AOP - an increase of the UV irradiation energy. For an UV AOP/UV/chlorine species AOP the oxidant/chlorine species and/or the UV irradiation energy could be increased.

Controlling the AOP/chlorine species AOP could also work the other way round - in case of a decrease of the organic background load of the water to be treated the AOP process can be down-regulated, for example by a reduction of the oxidant/chlorine species and/or a decrease of the UV irradiation energy.

Up/down-regulated could also mean adjusting said pH value, said temperature and/or said flow rate of said water to be treated.

In many raw water sources to be treated changes in organic loads are expected due to rainfall for example in surface waters or pumping variations for groundwater remediation systems. In industrial wastewater for example changes can go together with variations within productions periods.

Chlorine species demand/consumption, for example a consumption of chlorine dioxide as well as a consumption of chlorine, as a control parameter includes the advantage that it can also be used as pre-oxidative step to the AOP treatment. Therefore chlorine species pre-oxidation will remove a certain amount of contaminants from the water to be treated and at the same time the measurement of the chlorine species demand, i.e. reaction kinetics, will allow to control a level of a following AOP treatment.

Therefore, the invention is leading to a highly effective decontamination of the water to be treated with low energy and chemical consumption and less people's exposure using the treated water.

That means, even the process control of the AOP, especially of the chlorine species AOP, by the chlorine species demand according to the invention can make the AOP/chlorine species AOP usable for a sustainable, effective water treatment.

Therefore, the invention provides a new, effective process as a very efficient water treatment procedure reaching a targeted water quality at a very economic, ecological and practical way.

Indirectly the chlorine species demand can be an indicator for the concentration of other water contaminants that are not easily measured online. E.g., rainfall could lead to dilution of organic micro pollutants.

According to a preferred embodiment, said chlorine species to be added - for example by using said dosing means - or (already) dissolved in said water to be treated is chlorine (Cl₂) or chlorine dioxide (ClO₂) which will be dissolved in said water as said free chlorine species. In other words, chlorine (Cl₂) or chlorine dioxide (ClO₂) can be used as precursor for said controlled AOP reaction.

Free chlorine species is known as a concentration of residual chlorine in water, present as dissolved gas (Cl₂), hypochlorous acid (HOCl), and/or hypochlorite ion (OCl⁻). The forms of free chlorine species exist together in equilibrium - depending by a pH value and a temperature of the water. Free chlorine species is also known as a concentration of residual chlorine dioxide in water.

In a preferred embodiment said controlled AOP could be a traditional, chemical AOP using reactants/oxidants such as H₂O₂, O₃ or peroxone, or a chlorine species AOP using reactants/oxidants such as chlorine (Cl₂) or chlorine dioxide (ClO₂) for forming/generating said hydroxyl radicals.

According to a further preferred embodiment solely said chlorine species is added - as the solely oxidant - to said single flow of said water to be treated. Since said chlorine species would be added in said single flow, said - chlorine species - AOP would be applied to said single flow of said water to be treated while controlling said - chlorine species - AOP by measuring said demand of said chlorine species added and dissolved in said water to be treated. In other words - said chlorine species will be the oxidant of said - chlorine species - AOP as well as the leading parameter for controlling the - chlorine species - AOP.

According to a further preferred embodiment said traditional oxidant, for example H₂O₂, O₃ or peroxone, is added additionally to water to be treated while said traditional oxidant is added in said main flow and said chlorine species is added in said by pass flow of said water to be treated. Since said traditional oxidant would be added in said main flow, said AOP would be applied to said main flow of said water to be treated while controlling said AOP by measuring said demand of said chlorine species added and dissolved in said by pass of said water to be treated. In other words - said traditional oxidant will be the oxidant of said traditional AOP whereas said chlorine species will be said leading parameter for controlling said traditional AOP.

Besides said traditional, chemical AOP/chlorine species AOP said controlled AOP could also be an ultraviolet driven AOP/chlorine species AOP (UV AOP, UV/chlorine species AOP) with UV radiation being used to generate the hydroxyl radicals by a photolysis.

According to said embodiment using said UV AOP/chlorine species AOP an UV source, for example an UV lamp, especially being controlled by said controlling means could be arranged in said chamber/at said zone or said area while said water is being irradiated by flowing through said chamber/zone/area.

Said - especially controlled - UV irradiation could be applied with an irradiation dose of about 400 J/m² - 4000 J/m². Furthermore, said UV irradiation could have a wavelength of about 100 nm - 400 nm, especially having a wavelength of about 200 nm - 400 nm, furthermore especially of about 250 nm - 260 nm.

In a preferred embodiment said UV source will be a poly-chromatic irradiator/medium pressure UV source. Medium pressure UV sources/lamps provide an expanded wave length spectrum and could be constructed more compactly.

Said UV source could also be a mono-chromatic irradiator/low pressure UV source, for example a low pressure amalgam UV lamp or a low pressure mercury UV lamp. Low pressure UV lamps are highly efficient while providing a small spectrum by a wave length of about 257,3 nm, less energy input combined with less costs.

As well solar irradiance can be used as an UV source.

Furthermore an UV sensor (or more) - for a low pressure UV source or a medium pressure UV source - and/or a UV filter (or more) could be used in combination with said UV irradiation provided by said UV source, e.g. low pressure UV source or medium pressure UV source, for controlling an irradiance of said UV irradiation, especially while measuring said UV irradiation filtered by said UV filter.

According to a preferred embodiment a further filter could be used - in combination with said UV source - filtering said UV irradiation to irradiate the water, e.g. to cut-off the UV irradiation at predetermined wave length. E.g. a quartz sleeve could be used to achieve cut-off of the UV irradiation at 240 nm to irradiate said water to be treated, e.g. potable water, with UV wave length longer than 240 nm.

The process control could be enhanced, especially in case of UV based AOPs but as well as in case of traditional chemical AOPs/chlorine species AOPs, with turbidity measurement. Both parameters together, said chlorine species demand as well as said turbidity of the water to be treated, allow an accurate, more optimized process control for the AOP reducing energy consumption and costs.

The turbidity could be measured - in flow direction - before said adding of said chlorine species - and/or said adding of said alternative oxidant since a measurement of turbidity caused by said chlorine species and/or said alternative oxidant added to said water to be treated could be avoided. Alternatively, the turbidity could also be measured at other locations in flow direction of said water to be treated.

Turbidity is known as a measure of the degree to which the water loses its transparency due to the presence of suspended particles. The more total suspended solids in the water, the murkier it seems and the higher the turbidity. Turbidity is considered as a good measure of the quality of water.

It is also known that there are various parameters influencing the turbidity of the water. Some of these are: - phytoplankton, sediments from erosion, resuspended sediments from the bottom (frequently stir up by bottom feeders like carp), waste discharge, algae growth, urban runoff.

The suspended particles absorb heat from the sunlight, making turbid waters become warmer, and so reducing the concentration of oxygen in the water (oxygen dissolves better in colder water). Some organisms also can't survive in warmer water.

The suspended particles scatter the light, thus decreasing the photosynthetic activity of plants and algae, which contributes to lowering the oxygen concentration even more. The suspended particles also help the attachment of heavy metals and many other toxic organic compounds and pesticides. It is essential to eliminate the turbidity of water in order to disinfect it effectively for drinking purposes. This fact adds some extra cost to the treatment of surface water supplies.

Turbidity is measured in NTU: Nephelometric Turbidity Units. Known instrument used for measuring it is called nephelometer or turbidimeter, which measures the intensity of light scattered at 90 degrees as a beam of light passes through a water sample.

A turbidity measurement could be used to provide an estimation of the TSS (Total Suspended Solids) concentration, which is otherwise a tedious and difficult parameter to measure.

For UV based AOPs the main advantage of using both parameters will be an option to down-regulate UV energy in periods of lower organic load and lower turbidity, in which the treatment target can be met faster and therefore reduction of energy can be achieved. Also the oxidant/oxidant concentration can be down-regulated in such periods of lower organic load and lower turbidity while saving costs.

As well as turbidity can be used to up-regulate chemical oxidant concentrations in times of high turbidity instead of up-regulating lamp power for same chlorine species demand. This can help to safe energy as the loss in energy can be much higher than the costs for higher oxidants concentration for the process.

For chemical based AOPs, as peroxone AOPs, the main advantage will be an option to down-regulate the oxidant/oxidant concentration in periods of lower organic load and lower turbidity, in which the treatment target can be met faster and therefore reduction of costs can be achieved.

Both parameters, chlorine species demand as well as turbidity of the water to be treated, could be equally weighted for controlling the process as well as one parameter could be higher weighted.

Especially for UV based AOPs the turbidity, i.e. the turbidity parameter, could be higher weighted than the chlorine species demand as long as for UV disinfection systems mainly turbidity based control could be of advantage, depending on certification options.

Preferable said measuring means for measuring said demand of said chlorine species dissolved in said water to be treated have sensors for measuring a concentration of said chlorine species dissolved in said water, i.e. are sensors measuring a free chlorine or chlorine dioxide equivalent, being arranged at defined measuring points in a flow of said water containing said dissolved free chlorine species.

To enhance an accuracy of said measurement, a pH value and/or a temperature or/and a red-ox potential can be measured - in addition to said measurement - and can be integrated into said controlling.

The sensors could be installed in a way that allows homogenization of the added, i.e. injected, chlorine species before said chlorine species measurements, i.e. before said demand measurement, - and before the water to be treated reaches the AOP chamber/zone, especially before the water to be treated reaches UV source to be irradiated with UV.

In a preferred embodiment two sensors are arranged at two defined measuring points in said flow of said water containing said homogenized dissolved chlorine species.

Said/both measuring points could be arranged in said flow before/upstream the water to be treated reaches the AOP chamber as well as a first measuring point could be arranged upstream the AOP chamber while a second measuring point is arranged downstream the AOP chamber. Measuring upstream as well as downstream the AOP chamber requires to eliminate an AOP caused chlorine species consumption, e.g. an UV caused chlorine species consumption, in said AOP chamber.

It is also possible to arrange a couple of measuring points upstream as well as downstream the AOP chamber.

Measuring downstream the AOP chamber could be of advantage while knowing a final chlorine species concentration of said decontaminated water, for example to meet a predefined threshold value.

While knowing measuring parameters as a distance between said two sensors, a flow rate of the water to be treated, instants of time of said measuring by said, especially triggered, two sensors said demand could be estimated.

While sensor signals and/or sensor data according to said measured concentrations could be processed by said controlling means said demand could be estimated by said controlling means using said measuring parameters, said controlling means further arranged to control said acting means and said water treatment based on said demand.

Such a sensor, for example a membrane sensor FC1 or a membrane sensor DC7 of Wallace & Tiernan (Wallace & Tiernan, Siemens, Water Technologies, Multi-Funktions-Analysesysteme, MFA-FC1, -CD7), is well known, long term stable while measuring and requires less maintenance costs.

As well open cell amperiometric systems can be used for such AOP analyzer and controller systems.

A further sensor for measuring the chlorine species demand dissolved in said water to be treated is known from "Messung der Chlorzehrung in Abwasserproben", TU Dresden, Dr. A. Kuntze, Gutes Wasser mit System, Stand 2008.

The dosing means for adding the chlorine species - as well as other dosing means for adding an alternative oxidant - could be installed in a way that allows homogenization of the added, i.e. injected, chlorine species and/or altrenative oxidant before said demand measurement and before the water to be treated reaches the AOP chamber. Said dosing means could be coupled to said controlling means being controlled by said controlling means, especially while said dosing means are being said acting means of said chlorine species demand controlled AOP.

According to a preferred embodiment said water to be treated flows at a flow rate of 50 m³/h - 1000 m³/h, especially at a flow rate of about 200 m³/h. The flow rate can be controlled/monitored by using a flow control - as a part, especially as a functional part, of and/or coupled with said controlling means. Often the flow rate is a given requirement of the customers and therefore the monitoring of variations in flow rate can be used to adjust the AOP water treatment accordingly.

According to a preferred embodiment said water to be treated, for example potable water, (municipal)wastewater, industrial-/process water or ultrapure water, could be contaminated water, especially water contaminated with hazardous contaminants with low bio degradability, e.g. residuals of pesticides, pharmaceuticals, hormones, drugs, personal care or x-ray contrast media.

Further advantages as well as advantageous features of the invention appear from the following description.

### BRIEF DESCRIPTION OF THE DRAWINGS

With reference to the appended drawings, below follow specific descriptions of embodiments of the invention respectively cited as example, process controlled water treatment using a controlled UV/chlorine species AOP based on a chlorine species demand.

In the drawings:
- Figure 1: is a schematic illustration of a water treatment system according to a first embodiment of the invention,
- Figure 2: is a schematic illustration of a water treatment process according to a first and second embodiment of the invention,
- Figure 3: is a schematic illustration of a water treatment system according to a second embodiment of the invention.

### DETAILED DESCRIPTION OF EMBODIMENTS OF THE INVENTION

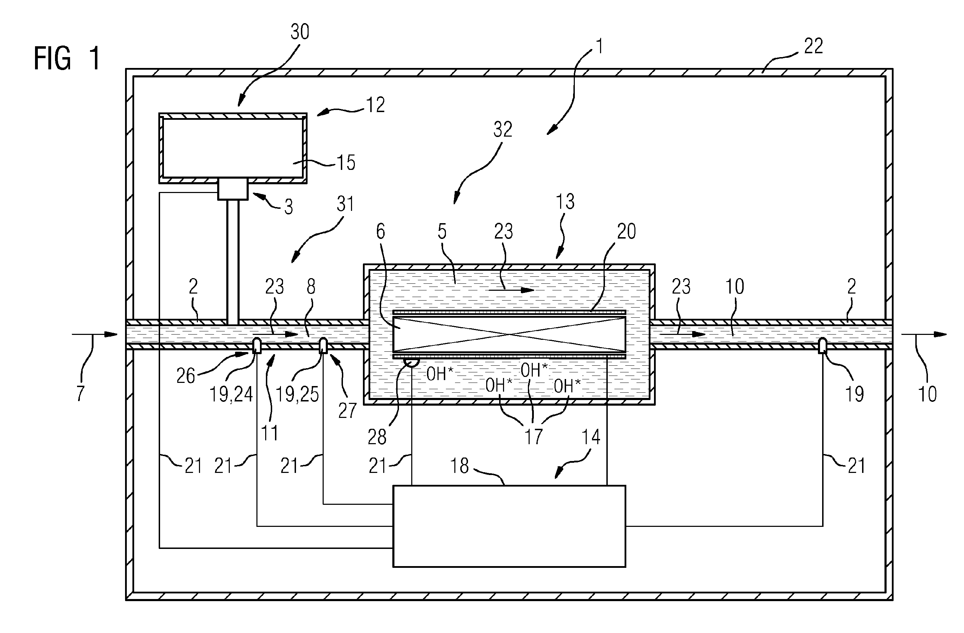

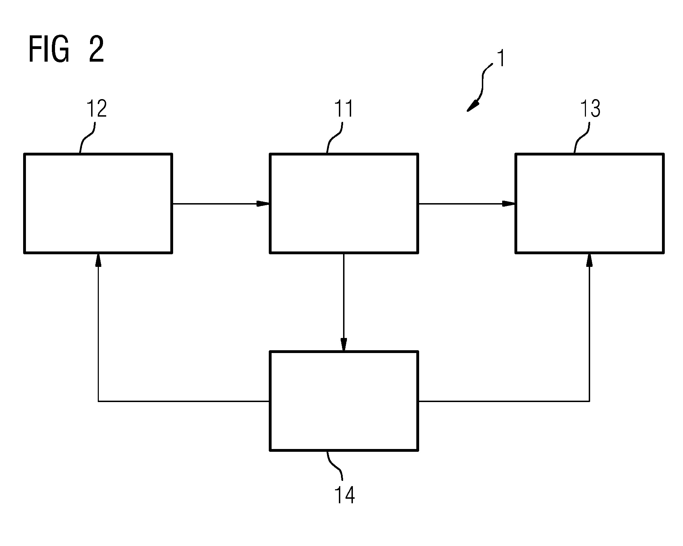

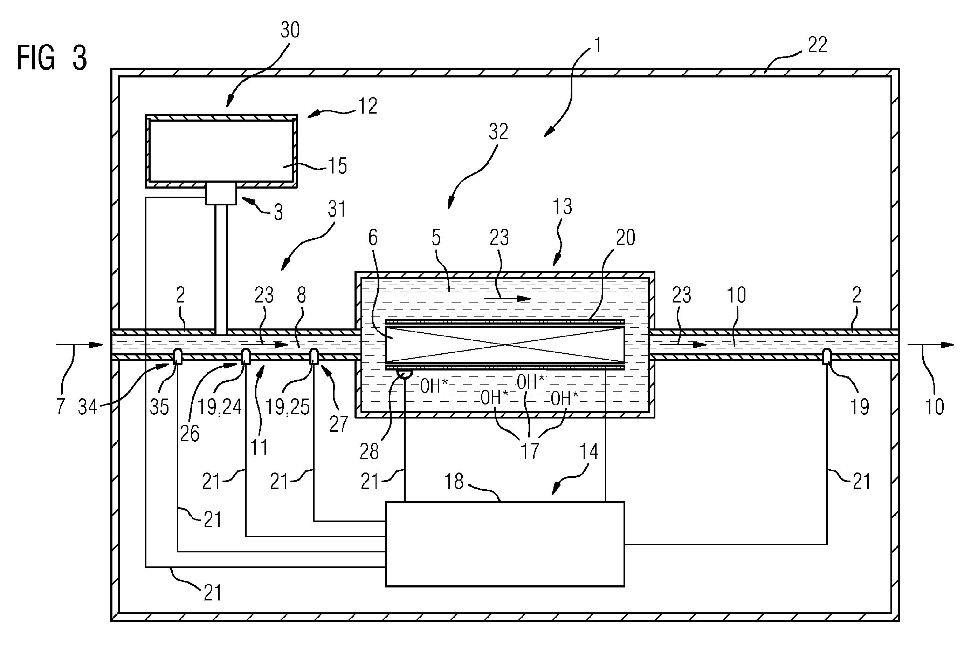

The present invention is directed to an arrangement and a method for a process controlled water treatment using a controlled UV/chlorine species AOP based on a chlorine species demand 1, cited also just as water treatment 1, as schematically illustrated in FIG 1 and FIG 2 (first embodiment) and in FIG 3 (and FIG 2) (second embodiment).

### FIRST EMBODIMENT

The water treatment 1 as illustrated in FIG 1 and FIG 2 will be used for decontaminating water, for example municipal wastewater or drinking water.

The water to be decontaminated (contaminated water) 7 contains hazardous contaminants, especially residuals of pesticides, pharmaceuticals, drugs, hormones, personal care products which can be eliminated by the water treatment 1.

The contaminated water 7 will flow through a water circulation using a piping system 2 discharging said contaminated water 7 from the source (wastewater treatment plant or drinking water treatment plant - not shown), pumping said discharged water 7 through the arrangement for the water treatment 1 being decontaminated by the process for the water treatment 1 and discharging the treated and decontaminated water 10 in the water body or fresh water piping system.

The arrangement for the water treatment 1 comprises three sections for treating the contaminated water 7 - optionally arranged within a housing 22.

The three sections 30, 31, 32 are arranged in flow direction 23 of the water to be treated so that the water can pass - fed by a pump (not shown) - the three sections of the arrangement 1.

In the first section 30 (adding section) a chlorine species 15, i.e. chlorine or chlorine dioxide 15, is added 12 to the contaminated water 7. A dosing apparatus 3 is functionally connected to the piping system 2 arranged for adding 12 the chlorine species 15, in this case chlorine 15, to the contaminated water 7 while the contaminated water 7 is passing the first section 30.

The chlorine 15 added 12 to the water will be dissolved in the water as free chlorine (chlorinated water 8).

In the following second section 31 (measuring section) a first sensor 19,24 and a second sensor 19, 25 are arranged at a first and second measuring point 26, 27 within the second section 31 for measuring the concentration of the free chlorine in the chlorinated water 8 - at the first and second measuring point 26, 27.

The first sensor 24, the second sensor 25 as well as the dosing apparatus 3 are connected to an analyser and controller system 18, cited as a controller 18, via a circuit 21 controlling the adding 12 of the chlorine 12 - based on the demand of the dissolved chlorine species - estimated on basis of the two concentration measurements of the first 24 and second sensor 25.

The chlorinated water 8 - leaving the second section 31 - enters the third section 32 (AOP section), i.e. a reaction chamber 5 with one or several low pressure, mono-chromatic amalgam UV lamps 6, to be irradiated with UV irradiation.

The reaction chamber 5 can have varying shape and size. FIG 1 shows said reaction chamber 5 shaped as a cylinder being passed by the chlorinated water 8.

While the chlorinated water 8 being irradiated with UV an UV/chlorine AOP 13 will be processed within the chlorinated water 8.

FIG 1 shows an UV sensor 28 and an UV filter 20 being arranged at the UV lamp 6 used for controlling the irradiance of said UV irradiation while measuring said UV irradiation filtered by said UV filter 20.

The UV sensor 28 as well as the UV lamp 6 is also connected to the controller 18 via a circuit 21 - being controlled by the controller 18. The controller 18 controls the UV irradiation based on the demand of the dissolved chlorine species estimated on basis of the two concentration measurements of the first 24 and second sensor 25.

The irradiation of the chlorinated water 8 - provided with an irradiation dose of about 3000 J/m² - yields radical species 17, especially OH* radicals 17, since it is possible to generate radical species 17 from irradiation of chlorine with UV.

The number of the radicals 17 depends, belong other parameters, on the initial chlorine concentration of the chlorine 15 added 12, the demand of the dissolved chlorine and the irradiance of the UV source/lamps 6. The number of the radicals 17 will be controlled on basis of the demand of the dissolved chlorine and will be adjusted, i.e. regulated, by the controller 18 controlling and regulating the dosing apparatus 3 and the UV irradiation.

The UV/chlorine AOP 11 uses the potential of the high reactive radicals 17 for oxidation of the contaminants in the chlorinated water 8 while eliminating the contaminants of the water 8 - leading to or resulting in the decontaminated water 10.

Leaving the third section 32 the decontaminated water 10 will be discharged in the pool.

A further sensor 19 could be arranged (optionally) - in the flow direction - following the reaction chamber 5 for measuring the concentration of a remaining free chlorine(remaining oxidant) in the decontaminated water 10.

This sensor 19 could also be connected to the controller 18 via a circuit 21 controlling the remaining oxidant and/or decontaminated water 10.

The first sensor 24 and a second sensor 25 - measuring the concentration of the free chlorine in the chlorinated water 8 at the first and second measuring point 26, 27 - are installed in a way that allows homogenization of the added, i.e. injected, chlorine species 15, 12 before said chlorine species measurements 11.

While the sensor signals and sensor data according to said measured concentrations 11 are transferred - via the circuit 21 - to the controller 18 and while knowing the measuring parameters as a distance between said two sensors 24, 25, a flow rate of the water to be treated 7, 8, instants of time of said measuring by the first and second sensor 24, 25 the chlorine species demand could be estimated by said controller 18.

The first and second sensor 24, 25 are realized as membrane sensors, i.e. as a membrane sensor FC1 of Wallace & Tiernan (Wallace & Tiernan, Siemens, Water Technologies, Multi-Funktions-Analysesysteme, MFA-FC1, -CD7).

The process controlled water treatment 1 is based on said chlorine species demand measured in the section 2 by said first and second sensor 24, 25 while measuring the concentration of the free chlorine in the chlorinated water 8 and analyzing the demand of the chlorine species by the controller 18.

The added oxidant 12, chlorine or chlorine dioxide 15, - dissolved in the water to be treated 7 - do react partly with organic water constitutes (organic background of the water matrix) while this consumption/demand of the chlorine species 15 measured 11 gives an approximation for changes within the organic load of the water background as well as being the leading parameter for controlling the process 1.

In case of higher organic load of the water 7, 8 more chlorine species 15 will be lost/consumed to these side reactions with fewer radicals 17 being available for the AOP 13.

A higher radical production is needed, for example to meet a treatment target contaminant degradation, which will be controlled by the controller 18 by regulating the adding of the oxidant 12 to the contaminated water 7 as well as regulating the irradiation of the water 8 by the UV source 6.

In case of such an increase of the organic background load of the water to be treated 7, 8 - indicated by a higher demand/consumption of the chlorine species 15 added to 12 and dissolved in the water to be treated 8 - the AOP process can be up-regulated - to form a higher amount of radicals 17 for oxidized in said AOP 13.

Up-regulated by the controller 18 will mean an increase of the UV irradiation energy as well as an increase of the oxidant 15, i.e. the chlorine species.

Controlling the process by the controller 18 will also work the other way round - in case of a decrease of the organic background load of the water to be treated 7, 8 the AOP process can be down-regulated by the controller 18, i.e. by a reduction of the oxidants/chlorine species 15 and a decrease of the UV irradiation energy.

### SECOND EMBODIMENT

The water treatment 1 as illustrated in FIG 3 and FIG 2 will also be used for decontaminating water, for example municipal wastewater or drinking water. This water treatment 1 is an advanced water treatment 1 while using a turbidity of the water to be treated 7, 8 as a further parameter controlling the process.

This advanced water treatment 1 according the second embodiment is basically identical with the water treatment 1 according to the first embodiment so that functional and objective principles and parts/means of said water treatment according to the first embodiment are also significant for this advanced water treatment 1 - as described above. Identical parts/means and functions are referenced by identical reference numbers.

The process control according the advanced water treatment as illustrated in FIG 3 (and FIG 2) is enhanced with a turbidity measurement 34. Both parameters together, said chlorine species demand as well as said turbidity of the water to be treated 7, 8, allow an accurate, more optimized process control for the AOP reducing energy consumption and costs.

As illustrated in FIG 3 the turbidity is measured 34 by a turbidimeter 35 arranged upstream the first section 30, i.e. upstream the adding of the chlorine 15 to the water 12. Its signals/data of said turbidity measurement are transferred to the controller 18 - via a circuit 21 - for controlling the water treatment regulating the radical forming/amount 17.

For the UV based AOP 13 both parameters, i.e. the chlorine species demand as well as turbidity of the water to be treated 7, 8, are used - by the controller analyzing the need of radicals- for regulating (down/up-regulation) the UV energy irradiating the water to be treated 7, 8 and/or the adding 12 of the oxidant 15, i.e. the adding 12 the chlorine species 15. In periods of lower organic load and lower turbidity the treatment target can be met faster and therefore reduction of energy and oxidant can be achieved.

While controlling the process 1, using both parameters, the turbidity parameter will be higher weighted than the chlorine species demand as long as for UV disinfection systems mainly turbidity based control could be of advantage, depending on certification options.

## Claims

1. Method for a water treatment comprising the following steps
(a) adding (12) a chlorine species (15) to water to be treated (7) to be dissolved (free chlorine species) in said water to be treated (8),
(b) measuring (11) a demand of said chlorine species (15) dissolved in said water to be treated (8) (chlorine species demand) while said chlorine species (15) dissolved in said water to be treated (8) partly reacting with organic water constitutes within said water to be treated (8),
(c) applying (13) an AOP to said water to be treated (8) while controlling (14) said AOP by using said measured demand of said chlorine species (15) dissolved in said water to be treated (8).

2. Method for a water treatment according to any preceding claim wherein said chlorine species (15) is chlorine (Cl₂) or chlorine dioxide (ClO₂) which will be dissolved in said water to be treated (8) as said free chlorine species.

3. Method for a water treatment according to any preceding claim wherein while controlling (14) said AOP (13) a forming of the hydroxyl radicals (17) is regulated, especially by adjusting said adding (12) of said chlorine species (15) and/or by adjusting an adding of an alternative oxidant.

4. Method for a water treatment according to any preceding claim wherein said AOP (13) is a traditional, chemical AOP, an ultraviolet driven AOP (UV AOP), a chlorine species AOP or an ultraviolet driven chlorine species AOP (UV/chlorine species AOP).

5. Method for a water treatment according to any preceding claim wherein said AOP (13) is an UV/chlorine species AOP and while controlling (14) said UV/chlorine species AOP (13) a forming of the hydroxyl radicals is regulated by regulating an UV energy irradiating said water to be treated (8) and/or by regulating said adding (12) of said chlorine species (15).

6. Method for a water treatment according to any preceding claim wherein said AOP (13) is an UV AOP, while controlling (14) said UV AOP (13) a forming of the hydroxyl radicals is regulated by regulating an UV energy irradiating said water to be treated (8) and/or by regulating an adding of an alternative oxidant in a main flow of said water to be treated, while adding (12) said chlorine species (15) and/or measuring (11) said demand of said chlorine species (15) in a by pass flow of said water to be treated.

7. Method for a water treatment according to any preceding claim wherein a turbidity of said water to be treated (7, 8) is measured (34) and said controlling of said AOP (13) uses said measured turbidity in said water to be treated (7, 8).

8. Method for a water treatment according to any preceding claim wherein said measured (11) chlorine species demand as well as said measured (34) turbidity of said water to be treated (7, 8) are used as equally weighted parameters for controlling the AOP (13) or said measured (35) turbidity is higher weighted than the measured (11) chlorine species demand for controlling (14) the AOP (13).

9. Method for a water treatment according to any preceding claim wherein said water to be treated (7) is a contaminated water, especially contaminated with hazardous contaminants with low bio degradability.

10. Method for a water treatment according to any preceding claim used for water treatment of (municipal) potable water, wastewater, industrial-/process water or ultrapure water.

11. Arrangement for a water treatment comprising
- a dosing means (3) arranged for adding (12) a chlorine species (15) to water to be treated (7) to be dissolved in said water to be treated (8),
- a measuring means (24, 25) for measuring (11) a demand of said chlorine species (15) dissolved in said water to be treated (8) (chlorine species demand) while said chlorine species (15) dissolved in said water to be treated (8) partly reacting with organic water constitutes within said water to be treated (8),
- an AOP chamber (5) for applying an AOP (13) to said water to be treated (8),
- a controlling means (18) at least being coupled to said measuring means (24, 25) and an acting means (3, 6) for acting on said water treatment and said controlling means (18) being arranged for controlling (14) said AOP (13) by using said measured (11) demand of said chlorine species (15) dissolved in said water to be treated (8) and said acting means (3, 6) for acting on said water treatment.

12. Arrangement for a water treatment according to any preceding arrangement claim wherein said AOP chamber (5) comprises an UV source (6) which is arranged in said AOP chamber (5) while said water to be treated (8) is flowing (23) through said AOP chamber (5).

13. Arrangement for a water treatment according to any preceding arrangement claim further comprising an UV sensor (28) and/or a filter (20) arranged for controlling an irradiance of said UV irradiation, especially while measuring said UV irradiation filtered by said filter (20) or filtering said UV irradiation for irradiating said water to be treated (8).

14. Arrangement for a water treatment according to any preceding arrangement claim wherein said UV source (6) is a mono-chromatic irradiator or a poly-chromatic irradiator and/or said UV source is a low pressure UV source or a medium pressure UV source.

15. Arrangement for a water treatment according to any preceding arrangement claim comprising a turbidimeter (35) for measuring (34) a turbidity in said water to be treated (8), said turbidimeter (34) being arranged for transferring signals/data of said turbidity measurement (34) to said controller 18 for controlling (14) said AOP (13) by using said measured (11) demand of said chlorine species (15), said measured (34) turbidity and said acting means (3, 6) for acting on said water treatment.
